Europäisches Patentamt

European Patent Office

Office européen des brevets

(11) Publication number: **0 345 824 B1**

# EUROPEAN PATENT SPECIFICATION

(45) Date of publication of patent specification: **28.09.94**　(51) Int. Cl.⁵: **C04B 35/48**, C04B 41/88,
//H01M8/12

(21) Application number: **89113292.0**

(22) Date of filing: **16.12.83**

(60) Publication number of the earlier application in accordance with Art.76 EPC: **0 115 148**

(54) **Method for producing ceramics.**

(30) Priority: **24.12.82 GB 8236813**
**25.04.83 GB 8311146**

(43) Date of publication of application:
**13.12.89 Bulletin 89/50**

(45) Publication of the grant of the patent:
**28.09.94 Bulletin 94/39**

(84) Designated Contracting States:
**DE FR GB**

(56) References cited:
**EP-A- 0 036 786**　　**EP-A- 0 064 211**
**DE-A- 969 200**　　　**DE-A- 2 350 364**
**DE-A- 2 939 428**　　**GB-A- 1 048 069**

**EP83307682.1**

(73) Proprietor: **NGK INSULATORS, LTD.**
**2-56, Suda-cho, Mizuho-ku**
**Nagoya-shi Aichi-ken (JP)**

(72) Inventor: **Mase, Syunzo 435, Aza-Motokinogo**
**Ohaza-Tobishima-shinden**
**Tobishima-Mura**
**Ama-Gun Aichi Pref. (JP)**
Inventor: **Soejima, Shiego 25-70, Aza-Jiami**
**Ohaza-Inokoshi**
**Idaka-Cho**
**Meito-Ku Nagoya City (JP)**

(74) Representative: **Myerscough, Philip Boyd et al**
**J.A.KEMP & CO.**
**14, South Square**
**Gray's Inn**
**London WC1R 5LX (GB)**

EP 0 345 824 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to the preparation of zirconia and/or hafnia-containing ceramics, particularly ceramics having a high electric resistance and a high mechanical strength and thus having utility as solid electrolytes, particularly in oxygen sensors.

Various studies have been conducted into ceramics consisting mainly of zirconia, both as functional materials and constructive materials. Applications of zirconia ceramics include use in solid electrolytes, parts having mechanical high strength, refractory materials and the like. GB-A-1048069, for example, describes solid solution compositions of zirconia with rare earth oxides such as niobates. These compositions, prepared by mixing $ZrO_2$ with the other constituent rare earth oxides of the composition followed by grinding, drying and then pressing and firing the resulting mixture, are particularly useful as high temperature ceramics.

When a zirconia ceramic is used as a solid electrolyte, the internal resistance is preferably low to take out the electromotive force, and the electric resistance of the ceramic should be as low as possible at such high temperatures as 350°C and above. The ceramic should also have a high mechanical strength in order to provide vibration resistance and thermal shock resistance. Embodiments of such zirconia ceramics are disclosed in US-A-4 266 979, US-A-4 360 598 and JP-A-58-55 373.

As is well known, zirconia ceramics can be used as solid electrolytes owing to oxygen ion vacancies caused by the addition of stabilisers such as $Y_2O_3$, CaO to $ZrO_2$ as well known. That is, when the position $Zr^{4+}$ of positive tetravalent ion is substituted with $Y^{3+}$ or $Ca^{2+}$ of positive trivalent or divalent ion, the positive ion valence number per crystal lattice is reduced, so that the number of oxygen ion $O^{2-}$ having negative ion is reduced for maintaining the electric neutrality and the movement of oxygen ion becomes feasible due to oxygen ion vacancy caused therefrom.

The concentration cell constructed with such a theory is reversible and if there is difference of the oxygen concentration between both ends of the solid electrolyte, the electromotive force is caused by the well known Nernst's equation

$$E = \frac{RT}{4F} \ln \frac{P_{O_2}(I)}{P_{O_2}(II)}$$

and reversely, when a direct current voltage is applied to both ends of the solid electrolyte to flow current, oxygen ion moves from negative direction toward positive direction and oxygen can be moved from one side of the solid electrolyte to another side. This is well known as oxygen pump.

When a direct current voltage is applied to a conventional zirconia ceramic to flow current, if the applied voltage is lower than 1 V, the movement of the oxygen ion occurs moderately, so that an oxygen pump is obtained but when the applied voltage is higher and becomes about 10 V, the movement of oxygen ion can not flow to the direct current and polarization occurs in the interior of the zirconia ceramic and oxygen ion in the negative side is deficient and the zirconia ceramic is broken down.

Namely, known zirconia ceramics have been very weak against the application of the direct current voltage.

When such zirconia,ceramics are used as a solid electrolyte for oxygen sensor, the drawbacks appear in the following case.

In particular, when zirconia ceramics are used in an oxygen sensor for automotive exhaust gas, in order to operate the sensor at the exhaust gas temperature of as low as about 350°C, the portion constructing the concentration cell is heated with a heater. This structure is shown, for example, in US-A-4,334,974. In the oxygen sensor having such a structure, the heater is heated at a direct current voltage of about 12-14 V which is battery voltage and therefore an insulating layer must be interposed between the heater and the concentration cell in order that the voltage for heating the heater does not influence the electromotive force of the concentration cell. If a conventional zirconia ceramic is used as this insulating layer, the zirconia ceramic is not only broken by the direct current voltage of 12-14 V applied to the heater, but also the voltage applied to the heater influences the electromotive force of the concentration cell due to zirconia of which the electric resistance becomes lower at a high temperature. When an alumina ceramic which is a high resistor as a insulating layer, is used, the insulating property is good but the thermal expansion coefficient of an alumina ceramic is different from that of a zirconia ceramic, so that in use when the heat cycle between a high temperature and a low temperature is vigorous, an alumina ceramic exfoliates from

2

the concentration cell having a zirconia ceramic as solid electrolyte. Furthermore, such an oxygen sensor has the drawback that in production, when zirconia and alumina, which have different firing shrinkage percents, are cofired, zirconia and alumina are exfoliated upon firing and cooling.

By the method of the present invention, ceramics are prepared which have substantially the same firing shrinkage and thermal expansion properties as conventional zirconia ceramics, a high electric resistivity, that is a satisfactory direct current voltage resistance and a high mechanical strength.

According to the invention there is provided a method of producing ceramics comprising (1) at least 70% by weight of a mixture consisting essentially of 5 to 30 mol % of at least one component selected from Group A consisting of $YO_{1.5}$, $ScO_{1.5}$, $SmO_{1.5}$, $EuO_{1.5}$, $GdO_{1.5}$, $TbO_{1.5}$, $DyO_{1.5}$, $HoO_{1.5}$, $ErO_{1.5}$, $TmO_{1.5}$, $YbO_{1.5}$, $LuO_{1.5}$, CaO and MgO; 5 to 40 mol % of at least one component selected from Group B consisting of $NbO_{2.5}$ and $TaO_{2.5}$; and 30 to 90 mol % of at least one component selected from group C consisting of $ZrO_2$ and $HfO_2$, the total amount of the components of Groups A, B and C being 100%; and (2) optionally up to 30% by weight of, as a sintering aid, alumina, silica, clay or glass, which method comprises mixing the components A, B and C optionally with a sintering aid by a wet process, drying the resulting mixture, calcining and dry-pulverising the mixture, forming a shaped body from the pulverised mixture and firing the shaped body at a temperature of from 1000°C to 1600°C.

Owing to the dry-pulverizing step, the method of the invention has the advantages that the pulverising time is short, the firing temperature is low, the firing shrinkage percent is reduced and the like, and the components of Group A, the components of Group B and the components of Group C are mixed thoroughly and the solid solution is readily formed. As a result, the ceramic having a high electric resistivity can be easily obtained.

The invention will now be described in detail with reference to the accompanying drawings, wherein:

Fig. 1 is a graph illustrating the variation of electric resistivity of ceramics produced by the method of the invention when the molar ratio of the components of Group B to the components of Group A is varied;

Fig. 2 is a graph illustrating the thermal expansion property of ceramics produced in accordance with the present invention; and

Fig. 3 illustrates the development of an oxygen sensor element produced from a ceramic composition prepared by the method of the present invention.

The present invention lies in the preparation of ceramics consisting essentially of 5-30 mol% of at least one component selected from Group A consisting of $YO_{1-5}$, $ScO_{1.5}$, $SmO_{1.5}$, $EuO_{1.5}$, $GdO_{1.5}$, $TbO_{1.5}$, $DyO_{1.5}$, $HoO_{1.5}$, $ErO_{1.5}$, $TmO_{1.5}$, $YbO_{1.5}$, $LuO_{1.5}$, CaO and MgO, 5-40 mol% of at least one component selected from group B consisting of $NbO_{2.5}$ and $TaO_{2.5}$ and 30-90 mol % of at least one component selected from group C consisting of $ZrO_2$ and $HfO_2$. The composition produced by the method of the present invention satisfies the following equation

$$\Sigma(4- \text{ (valence number of ion of each component of Group A))} \times \text{ (number of mole of each component of Group A)} \leqq \text{ (total number of mole of components of Group B)}$$

and the crystal phase is, preferably, mainly tetragonal.

In previously used zirconia ceramics, only components belonging to Group A defined in the present invention such as yttria, calcia and magnesia are added as the stabilizer. Of course, there are embodiments wherein a sintering aid is added thereto but the sintering aid has substantially no effect on the stabilization of zirconia ceramics. Therefore, the prior zirconia ceramics have a large number of oxygen ion vacancies in the crystal lattice as mentioned above.

In the method of the present invention, the amount of oxygen ion vacancy is reduced by adding the components belonging to Group B, that is components which become pentavalent positive ions, other than the stabilizer belonging to Group A. For example, if equimolar number of $YO_{1.5}$ and $NbO_{2.5}$ are added to $ZrO_2$, both $YO_{1.5}$ and $NbO_{2.5}$ form a solid solution together with $ZrO_2$ in the crystal and $Y^{3+}$ ion and $Nb^{5+}$ ion are formed other than $Zr^{4+}$ ion. In this case, $Y^{3+}$ ion and $Nb^{5+}$ ion are equimolar number, so that these ions become tetravalent positive ion in average and therefore become the same electric charge as $Zr^{4+}$ ion and $O^{2-}$ ion in the crystal lattice can maintain the electric neutrality in the amount of the stoichiometric volume of $ZrO_2$, so that $O^{2-}$ ion vacancy is not substantially caused. Accordingly, $O^{2-}$ ion hardly moves in the crystal and ceramics having an electrically high resistance are formed.

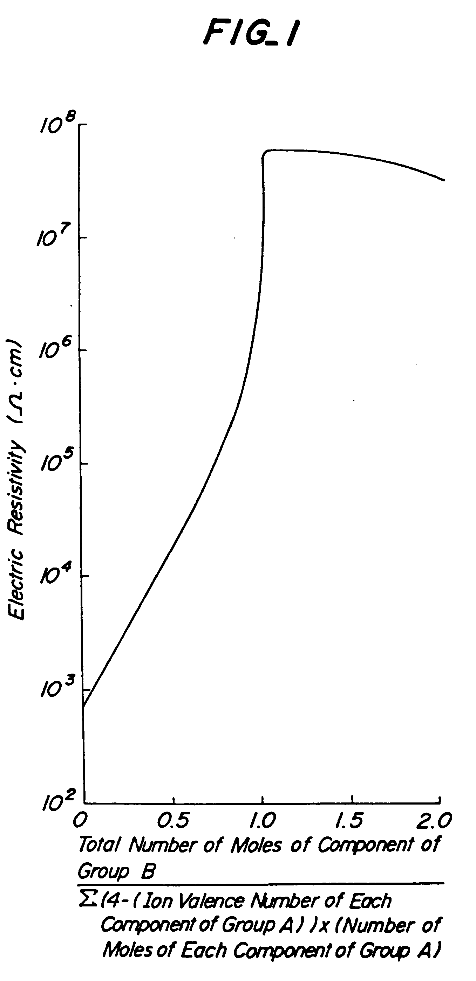

As conceived from the above theory, even if the number mole of the components of Group B which become pentavalent positive ion is less than the number of mole of the components of Group A which become divalent or trivalent positive ion, the addition of the components of Group B has the effect that the oxygen ion vacancy in the ceramics is reduced and the electric resistivity of the ceramics is enhanced but when the number of mole of the components of Group B becomes larger and the oxygen ion vacancy in the ceramics is not substantially caused, the electric resistivity is considerably increased. Fig. 1 shows the variation of the electric resistivity of ceramics when the ratio of (total number of mole of components of Group $B/\Sigma(4$-(ion valence number of each component of Group A))$\times$(number of mole of each component of Group A) is varied.

As seen from Fig. 1, when said ratio becomes the following relation, the electric resistivity suddenly increases and the desirable ceramics is obtained, $\Sigma(4$-(ion valence number of each component of Group A))$\times$(number of mole of each component of Group A)$\leqq$(total number of mole of components of Group B). Furthermore, Fig. 1 shows the average value of the electric resistivity of ceramics obtained by various combinations of components by the method of the present invention.

The components of each of Groups A, B and C are selected by the following reason. Any components shown in Group A can be utilized even in one component as the stabilizer of $ZrO_2$ or $HfO_2$. This has been well known.

The components shown in Group B are added in order to reduce the oxygen ion vacancy and increase the electric resistivity. Therefore, any components which become positive ions of five or more valence, are active but in order to form a solid solution together with $ZrO_2$ or $HfO_2$, the components must have a given ion radius and as the results of a large number of experiments, $NbO_{2.5}$ and $TaO_{2.5}$ are most effective. The selection of these two components is a characteristic of the present invention. The elements shown in Group C are selected so that the same thermal expansion property as the prior zirconia ceramics is obtained. It has been well known that $ZrO_2$ and $HfO_2$ are similar in various properties and the same effects have been obtained in the experiments by which the present invention has been accomplished.

The composition range of each group has been determined by the following reasons.

The components shown in each of Group A and Group B have no activity to the stabilization of $ZrO_2$ and/or $HfO_2$ against the components of Group C in an addition amount of less than 5 mol%. In only the components of Group A, $ZrO_2$ and/or $HfO_2$ can be stabilized in the crystal phase containing tetragonal or cubic phase, in some cases monoclinic phase in the addition of more than 4 mol% but in only the components of Group B, these components have no activity for stabilizing $ZrO_2$ and/or $HfO_2$. However, if both the components of Group A and Group B are added in an amount of at least 5 mol% respectively, $ZrO_2$ and/or $HfO_2$ are stabilized and the ceramics having a high resistance can be obtained.

The term "stabilization of $ZrO_2$ and/or $HfO_2$" used herein means that the formation of monoclinic phase is made few or the monoclinic phase is not formed as in so-called "partially stabilized zirconia" or "fully stabilized zirconia".

When more than 30 mol% of the components of Group A and more than 40 mol% of Group B are concurrently added to the components of Group C, the phase which is presumed to be a compound consisting of the components of Group A and the components of Group B, increases and the thermal expansion coefficient lowers and the mechanical strength is reduced and such amounts are not desirable.

In the crystal phase of the ceramics produced in accordance with the present invention, there is either crystal phase of tetragonal, cubic or monoclinic phase, or a mixed phase thereof but the crystal phase shows different behavior from the case where only the stabilizer belonging to Group A is added to $ZrO_2$ as in the prior arts.

According to $ZrO_2$-$YO_{1.5}$ system phase diagram (for example, H.G. Scott, Journal of Materials Science, 10(1975), 1527-1535), if a solid solution having a composition of more than 15 mol% of $YO_{1.5}$ and a balance of $ZrO_2$ is formed, the product is substantially composed of cubic phase. However, in the method of the present invention, for example, if a solid solution having a composition of 17 mol% of $YO_{1.5}$ and 18 mol% of $NbO_{2.5}$ and a balance of $ZrO_2$ is formed, the insulating ceramic consists mainly of a tetragonal phase and in addition, a monoclinic phase and a compound phase presumed to be formed by reacting $YO_{1.5}$ with $NbO_{2.5}$ may be slightly precipitated.

The crystal phase of the insulating ceramic in the case of other compositions, when the amount of mole of components of Group B is smaller than that of the components of Group A, becomes cubic, tetragonal or the mixed phase thereof but when the amount of mole of the components of Group B is larger than that of the components of Group A, a tetragonal phase becomes the main part and in some cases, a monoclinic phase and a phase (referred to as "X phase" hereinafter) presumed to be a compound phase of the components of Group A and the components of Group B are precipitated.

The crystal phase of the insulating ceramic, even in ceramics having the same composition, can vary according to various factors, for example, the crystal grain size of the starting material, mixing process of the components of each group and the firing conditions.

Whatever the crystal phase, the electric resistivity is higher than for previously used zirconia ceramics but when the amount of monoclinic phase becomes larger, if such a ceramic is left to stand at about 250°C for a long time, the ceramic is apt to deteriorate and when the amount of X phase becomes larger, the

4

electric resistivity somewhat lowers and also the flexural strength of the ceramics lowers and these cases are not desirable. Thus, the crystal phase of the ceramics produced by the method of the present invention preferably consists mainly of tetragonal phase. The term "consisting mainly of tetragonal phase" used herein, shows that the height of the strongest peak of the tetragonal phase is highest, when the heights of the strongest peaks of every phases inspected by x-ray diffraction of the ceramics are compared.

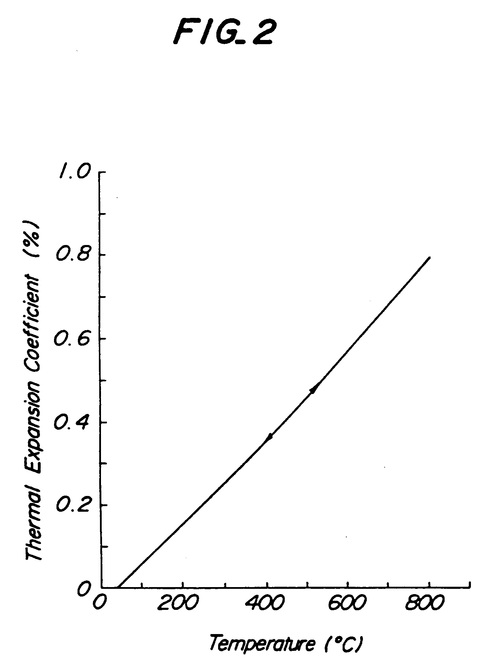

The thermal expansion coefficient of the ceramic produced in accordance with the present invention varies linearly both when the temperature is raised from room temperature to $800\,^{\circ}C$ or is reduced, as one embodiment is shown in Fig. 2 and there is no hysteresis due to phase transformation and the like. The thermal expansion coefficient thereof is $0.9\sim1.1\times10^{-5}\,^{\circ}C^{-1}$ and is not substantially different from $1.0\sim1.1\times10^{-5}\,^{\circ}C^{-1}$ of the prior stabilized zirconia ceramics.

The sample in Fig. 2 is the composition of 20 mol% of $YO_{1.5}$, 21 mol% of $TaO_{2.5}$ and 59 mol% of $ZrO_2$ but even in other compositions prepared by the method of the present invention, the behavior is not varied.

Of course, there is no great difference in the ceramic thermal expansion coefficient wherein the crystal phase consists mainly of tetragonal phase and the ceramics wherein the crystal phase consists mainly of cubic phase.

When the prior zirconia ceramics containing tetragonal phase are left to stand at a temperature range of $200\,^{\circ}C\sim300\,^{\circ}C$ for a long time, said ceramics are sometimes deteriorated and broken. While, even when the ceramics prepared in accordance with the present invention are left to stand at a temperature range of $200\,^{\circ}C$ to $300\,^{\circ}C$ for more than 1,000 hours, the ceramics are neither broken nor cause significant variation in the electric resistivity, flexural strength and thermal expansion coefficient.

The method of the present invention can be performed as follows.

Firstly, the components of each of Group A, Group B and Group C are mixed in the given amounts. The starting material containing these components may be powdery oxides or other compounds which are converted into oxides through the thermal decomposition. When the powdery oxides are used as the starting material, when the average grain size of the powders is less than 1 $\mu$m, the mixing is easy and such starting material is preferable.

The mixing is effected by a wet process, and after mixing the mixture is thoroughly dried. Then the mixture is calcined. This calcination promotes the mixing of the starting materials. The calcining temperature may be an optional temperature of 400 to $1,200\,^{\circ}C$.

Then, the mixture is dry-pulverised, when the mixture is solidified by the calcination and the like, the mixture is preferably coarsely crushed by a mortar, roll crusher and the like. The pulverising is carried out by a ball mill and the like. Dry-pulverising using a ball mill, a vibration mill and the like is preferable. Then, the obtained powders are shaped with a press, slip cast and the like and fired. The firing temperature is in the range of 1,000 to $1,600\,^{\circ}C$. The firing atmosphere may be any of air, oxidizing atmosphere and reducing atmosphere. In the reducing atmosphere, oxygen in the sintered body is taken off and the product may become blackish but thereafter if the sintered body is annealed in air, the blackening can be simply eliminated. The firing may be effected by a hot press and the like.

In the method of the present invention, clay, alumina, silica or glass, may be used in an amount of not more than 30% by weight as a sintering aid in addition to the components listed as the above described Group A, Group B and Group C. In particular, when the amount of mole of the components of Group B is larger than that of the components of Group A, breakage may be caused upon firing but this can be solved by the addition of the sintering aid. These substances do not particularly noticeably affect the electric resistivity. However, when the addition is excessive, the firing shrinkage percent upon the production and the thermal expansion coefficient of the ceramics vary, so that an amount exceeding 30% by weight is not preferable.

Furthermore, the usual $ZrO_2$ starting material contains 1 to 2% by weight of $HfO_2$, "$ZrO_2$" referred to in the present invention contains this amount of $HfO_2$ and when the description of "mixing of $ZrO_2$ and $HfO_2$" used herein means the mixture of $ZrO_2$ containing a slight amount of $HfO_2$ with purified $HfO_2$. However, examination has been made with respect to $ZrO_2$ having a high purity in which the content of $HfO_2$ is less than 100 ppm and of course, $ZrO_2$ starting material having a high purity may be used.

Various properties of ceramics produced by the method of the present invention were determined as follows.

The measurement of the electric resistivity was as follows. On both surfaces of a disc-shaped ceramics having a diameter of more than 20 mm and a thickness of about 1 mm, were formed electrodes and such a ceramics was put in an electric furnace of air atmosphere and the electric resistivity was measured by a direct current two terminal process. The measuring temperature was $600\,^{\circ}C$ and the applied voltage was 0.1-50 V.

The crystal phase was measured as follows. Polished mirror face of a disc-shaped ceramics having a diameter of about 15 mm and a thickness of about 3 mm were measured with an x-ray diffractometer.

The flexural strength was measured as follows. A rod-shaped ($3 \times 4 \times 40$ mm) and chamfered ceramics was used and the ceramics was measured by four point bending process of an external span of 30 mm, an internal span of 10 mm and a cross head speed of 0.5 mm/min.

The thermal expansion coefficient was measured by using a rod-shaped ($4 \times 4 \times 50$ mm) ceramics and by means of a differential expansion meter in which quartz glass is a standard.

The following Examples serve to illustrate the invention.

Example 1

A mixture consisting of zirconium oxide powder or hafnium oxide powder, powder of oxide consisting of the component of Group A or a compound for example, yttrium nitride, which is formed into the component of Group A through thermal decomposition, and powder consisting of the component of Group B in a mixing ratio shown in the following Table 1 was calcined at 800°C. After the calcination, the calcined product was mixed with a sintering aid in the case when a sintering aid shown in Table 1 was to be added, and then mixed with 0.5% by weight of polyethyleneglycol stearate as a pulverizing aid, and the resulting mixture was pulverized in dry state for 20-200 hours. The resulting powder was press molded and then fired at 1,250-1,400°C. The electric resistivity of the resulting sintered body was measured. The obtained results are shown in Table 1. It can be seen from Table 1 that the electric resistivity of the ceramics of Sample Nos. 1-19, which contain the component of Group B used in the method of the present invention, is higher by as high as about $10^2 \sim 10^5$ $\Omega \cdot$cm than that of the ceramics of Sample No. 20, which does not contain the component of Group B.

Table 1(a)-1

| Sample No. | Composition | | | | | | | | | |
| --- | --- | --- | --- | --- | --- | --- | --- | --- | --- | --- |
| | Group A | | | | | Group B | | | | |
| | Component | Mol% | Component | Mol% | Total mol% of Group A component | Component | Mol% | Component | Mol% | Total mol% of Group B component |
| 1 | $YO_{1.5}$ | 5 | | | 5 | $TaO_{2.5}$ | 5 | | | 5 |
| 2 | $YO_{1.5}$ | 6 | | | 6 | $NbO_{2.5}$ | 7 | | | 7 |
| 3 | $YO_{1.5}$ | 10 | | | 10 | $TaO_{2.5}$ | 8 | | | 8 |
| 4 | $YO_{1.5}$ | 15 | | | 15 | $NbO_{2.5}$ | 16 | | | 16 |
| 5 | $YO_{1.5}$ | 18 | | | 18 | $NbO_{2.5}$ | 20 | | | 20 |
| 6 | $YO_{1.5}$ | 18 | | | 18 | $TaO_{2.5}$ | 20 | | | 20 |
| 7 | $YO_{1.5}$ | 20 | | | 20 | $TaO_{2.5}$ | 15 | | | 15 |
| 8 | $YO_{1.5}$ | 20 | | | 20 | $NbO_{2.5}$ | 11 | $TaO_{2.5}$ | 11 | 22 |
| 9 | $YO_{1.5}$ | 20 | | | 20 | $NbO_{2.5}$ | 30 | | | 30 |
| 10 | $YO_{1.5}$ | 28 | | | 28 | $TaO_{2.5}$ | 30 | | | 30 |

EP 0 345 824 B1

Table 1(a)-2

| Sample No. | Composition | | | | | | | | | |
|---|---|---|---|---|---|---|---|---|---|---|
| | Group A | | | | | Group B | | | | |
| | Component | Mol% | Component | Mol% | Total mol% of Group A component | Component | Mol% | Component | Mol% | Total mol% of Group B component |
| 11 | $YO_{1.5}$ | 30 | | | 30 | $NbO_{2.5}$ | 28 | | | 28 |
| 12 | $YO_{1.5}$ | 10 | $YbO_{1.5}$ | 10 | 20 | $NbO_{2.5}$ | 11 | $TaO_{2.5}$ | 11 | 22 |
| 13 | $SmO_{1.5}$ | 15 | | | 15 | $NbO_{2.5}$ | 16 | | | 16 |
| 14 | CaO | 15 | | | 15 | $NbO_{2.5}$ | 32 | | | 32 |
| 15 | MgO | 18 | | | 18 | $TaO_{2.5}$ | 40 | | | 40 |
| 16 | $YO_{1.5}$ | 10 | $ErO_{1.5}$ | 10 | 20 | $NbO_{2.5}$ | 10 | $TaO_{2.5}$ | 11 | 21 |
| 17 | $YO_{1.5}$ | 20 | | | 20 | $NbO_{2.5}$ | 21 | | | 21 |
| 18 | $YbO_{1.5}$ | 25 | | | 25 | $TaO_{2.5}$ | 28 | | | 28 |
| 19 | $YO_{1.5}$ | 30 | | | 30 | $TaO_{2.5}$ | 35 | | | 35 |
| 20 | $YO_{1.5}$ | 20 | | | 20 | | - | | | - |

## Table 1(b)-1

| Sample No. | Composition | | | | | | | Electric resistivity ($\Omega \cdot cm$) |
| --- | --- | --- | --- | --- | --- | --- | --- | --- |
| | Group C | | | | | Sintering aid 1) | | |
| | Component | Mol% | Component | Mol% | Total mol% of Group C component | Compound | Wt.% | |
| 1 | $ZrO_2$ | 90 | | | 90 | - | - | $7.6 \times 10^6$ |
| 2 | $ZrO_2$ | 87 | | | 87 | alumina | 3 | $3.8 \times 10^7$ |
| 3 | $ZrO_2$ | 82 | | | 82 | - | - | $1.2 \times 10^5$ |
| 4 | $ZrO_2$ | 69 | | | 69 | clay | 5 | $4.9 \times 10^7$ |
| 5 | $ZrO_2$ | 62 | | | 62 | clay | 2 | $5.2 \times 10^7$ |
| 6 | $ZrO_2$ | 62 | | | 62 | clay | 5 | $6.5 \times 10^7$ |
| 7 | $ZrO_2$ | 65 | | | 65 | alumina | 3 | $9.4 \times 10^4$ |
| 8 | $ZrO_2$ | 58 | | | 58 | { alumina silica | 5 5 | $7.1 \times 10^7$ |
| 9 | $ZrO_2$ | 50 | | | 50 | clay | 25 | $5.7 \times 10^7$ |
| 10 | $ZrO_2$ | 42 | | | 42 | - | - | $5.9 \times 10^7$ |

EP 0 345 824 B1

**Table 1(b)-2**

| Sample No. | Composition — Group C | | | | | Sintering aid | | Electric resistivity ($\Omega \cdot cm$) |
|---|---|---|---|---|---|---|---|---|
| | Component | Mol% | Component | Mol% | Total mol% of Group C component | Compound | Wt.% 1) | |
| 11 | $ZrO_2$ | 42 | | | 42 | - | - | $6.0 \times 10^5$ |
| 12 | $ZrO_2$ | 58 | | | 58 | - | - | $7.3 \times 10^7$ |
| 13 | $ZrO_2$ | 69 | | | 69 | alumina | 10 | $2.1 \times 10^7$ |
| 14 | $ZrO_2$ | 53 | | | 53 | silica | 5 | $2.0 \times 10^7$ |
| 15 | $ZrO_2$ | 42 | | | 42 | clay | 3 | $4.7 \times 10^7$ |
| 16 | $ZrO_2$ | 59 | | | 59 | clay | 5 | $6.2 \times 10^7$ |
| 17 | $ZrO_2$ | 30 | $HfO_2$ | 29 | 59 | {alumina / clay | 3 / 5 | $2.9 \times 10^7$ |
| 18 | $HfO_2$ | 47 | | | 47 | alumina | 5 | $3.2 \times 10^7$ |
| 19 | $ZrO_2$ | 35 | | | 35 | clay | 5 | $7.0 \times 10^7$ |
| 20 | $ZrO_2$ | 80 | | | 80 | - | - | $7.2 \times 10^2$ |

1) Addition amount of sintering aid based on the total weight of ceramics.

## Reference Example

The thermal expansion coefficient, flexural strength, main crystal phase of each ceramics obtained in Example 1 and shown in Table 1 were measured. The obtained results are shown in the following Table 2. It can be seen from Table 2 that the thermal expansion coefficient of ceramics of Sample Nos. 1-19 prepared according to the present invention ranges from $0.9 \times 10^{-5}\,°C^{-1}$ to $1.0 \times 10^{-5}\,°C^{-1}$, and is different by only small value within $0.2 \times 10^{-5}\,°C^{-1}$ from that of $1.1 \times 10^{-5}\,°C^{-1}$ of conventional ceramics of Sample No. 20. While, the flexural strength of the ceramics prepared by the method of the present invention is higher than that of the conventional ceramics of Sample No. 20 by as high as not less than 2 times, and the ceramics prepared by the method of the present invention have a crystal phase consisting mainly of cubic phase. The ceramics of Sample Nos. 1-20 were left to stand at 250°C for 1,000 hours in the air to effect a durability test, and the electric resistivity, thermal expansion coefficient and flexural strength of the above treated ceramics were measured. As the results, it was found that all of these properties did not substantially change from the properties before the durability test as shown in Table 2. Further, a disk-shaped test piece was produced from each of these ceramics, and a durability test of the ceramics was effected by applying 15 V of DC current between both electrodes for 1,000 hours in an electric furnace kept at 800°C. As the result, it was found that the conventional ceramics of Sample No. 20 was broken, but the ceramics prepared according to the present invention were not broken, and their electric resistivity did not substantially change from the electric resistivity before the application of the DC current.

Table 2(a)

| Sample No. | Before a durability test | | | After a durability test at 250°C for 1,000 hours | | | After a durability test by applying DC current at 800°C for 1,000 hours |
| | Thermal expansion coefficient ranging from 40°C to 800°C ($°C^{-1}$) | Flexural strength ($kg/mm^2$) | Main crystal phase 2) | Electric resistivity ($\Omega \cdot cm$) | Thermal expansion coefficient ranging from 40°C to 800°C ($°C^{-1}$) | Flexural strength ($kg/mm^2$) | Electric resistivity ($\Omega \cdot cm$) |
|---|---|---|---|---|---|---|---|
| 1 | $1.0 \times 10^{-5}$ | 33 | T | $7.8 \times 10^6$ | $1.0 \times 10^{-5}$ | 34 | $8.5 \times 10^6$ |
| 2 | $1.0 \times 10^{-5}$ | 37 | T | $3.7 \times 10^7$ | $1.0 \times 10^{-5}$ | 40 | $3.9 \times 10^7$ |
| 3 | $1.0 \times 10^{-5}$ | 34 | T | $1.3 \times 10^5$ | $1.0 \times 10^{-5}$ | 36 | $3.0 \times 10^5$ |
| 4 | $1.0 \times 10^{-5}$ | 40 | T | $5.3 \times 10^7$ | $1.0 \times 10^{-5}$ | 41 | $5.0 \times 10^7$ |
| 5 | $1.0 \times 10^{-5}$ | 45 | T | $5.1 \times 10^7$ | $1.0 \times 10^{-5}$ | 47 | $5.3 \times 10^7$ |
| 6 | $1.0 \times 10^{-5}$ | 39 | T | $6.7 \times 10^7$ | $1.0 \times 10^{-5}$ | 39 | $6.4 \times 10^7$ |
| 7 | $1.0 \times 10^{-5}$ | 33 | T | $9.3 \times 10^4$ | $1.0 \times 10^{-5}$ | 34 | $2.1 \times 10^5$ |
| 8 | $1.0 \times 10^{-5}$ | 37 | T | $7.1 \times 10^7$ | $1.0 \times 10^{-5}$ | 39 | $7.1 \times 10^7$ |
| 9 | $0.9 \times 10^{-5}$ | 30 | T | $5.7 \times 10^7$ | $0.9 \times 10^{-5}$ | 32 | $5.8 \times 10^7$ |
| 10 | $1.0 \times 10^{-5}$ | 41 | T | $5.7 \times 10^7$ | $1.0 \times 10^{-5}$ | 42 | $5.7 \times 10^7$ |
| 11 | $1.0 \times 10^{-5}$ | 23 | T+C | $6.2 \times 10^5$ | $1.0 \times 10^{-5}$ | 25 | $1.3 \times 10^6$ |

EP 0 345 824 B1

Table 2(b)

| Sample No. | Before a durability test | | | | After a durability test at 250°C for 1,000 hours | | After a durability test by applying DC current at 800°C for 1,000 hours |
|---|---|---|---|---|---|---|---|
| | Thermal expansion coefficient ranging from 40°C to 800°C ($°C^{-1}$) | Flexural strength ($kg/mm^2$) | Main crystal phase 2) | Electric resistivity ($\Omega \cdot cm$) | Thermal expansion coefficient ranging from 40°C to 800°C ($°C^{-1}$) | Flexural strength ($kg/mm^2$) | Electric resistivity ($\Omega \cdot cm$) |
| 12 | $1.0 \times 10^{-5}$ | 37 | T | $7.2 \times 10^7$ | $1.0 \times 10^{-5}$ | 37 | $7.4 \times 10^7$ |
| 13 | $1.0 \times 10^{-5}$ | 29 | T | $2.4 \times 10^7$ | $1.0 \times 10^{-5}$ | 30 | $2.2 \times 10^7$ |
| 14 | $1.0 \times 10^{-5}$ | 32 | T | $2.1 \times 10^7$ | $1.0 \times 10^{-5}$ | 32 | $1.9 \times 10^7$ |
| 15 | $1.0 \times 10^{-5}$ | 32 | T | $4.9 \times 10^7$ | $1.0 \times 10^{-5}$ | 33 | $5.0 \times 10^7$ |
| 16 | $1.0 \times 10^{-5}$ | 38 | T | $6.2 \times 10^7$ | $1.0 \times 10^{-5}$ | 40 | $6.3 \times 10^7$ |
| 17 | $1.0 \times 10^{-5}$ | 31 | T | $2.8 \times 10^7$ | $1.0 \times 10^{-5}$ | 32 | $2.8 \times 10^7$ |
| 18 | $1.0 \times 10^{-5}$ | 29 | T | $3.3 \times 10^7$ | $1.0 \times 10^{-5}$ | 31 | $3.2 \times 10^7$ |
| 19 | $0.9 \times 10^{-5}$ | 34 | T+M | $7.1 \times 10^7$ | $0.9 \times 10^{-5}$ | 20 | $7.1 \times 10^7$ |
| 20 | $1.1 \times 10^{-5}$ | 12 | C | $7.3 \times 10^2$ | $1.1 \times 10^{-5}$ | 11 | broken |

2) T: Tetragonal crystal, C: Cubic crystal, M: Monoclinic crystal.

Example 2

Oxide powders of respective components or compounds, which would be formed into the oxides through thermal decomposition, were mixed in wet state such that the resulting mixture had a composition

13

shown in the following Table 3. After drying, the mixture was calcined at a temperature within the range of 600-1,000 °C. The calcined product was crushed, mixed with a sintering aid in the case where a sintering aid shown in Table 3 was to be added, and then subjected to pulverization, press molding and firing in the same manners as described in Example 1. In Table 3, Sample Nos. 21-32 are ceramics prepared by the method of the present invention, and Sample Nos. 33-36 are ceramics outside the scope of the method of the present invention. The resulting ceramics were measured with respect to the electric resistivity, thermal expansion coefficient, flexural strength and crystal phase. The obtained results are shown in Table 3. It can be seen from Table 3 that all the electric resistivities of the ceramics are high and are in the order of $10^7$ $\Omega \bullet cm$. While, the thermal expansion coefficients thereof are within the range of $0.9 \times 10^{-5} \, ^\circ C^{-1} \sim 1.0 \times 10^{-5} \, ^\circ C^{-1}$ and are substantially the same as those of conventional zirconia ceramics. The crystal phase of the ceramics of the present invention consists of tetragonal phase or a mixed phase of tetragonal phase and cubic phase.

Table 3(a)-1

| Sample No. | Composition | | | | | | | | | | | |
|---|---|---|---|---|---|---|---|---|---|---|---|---|
| | Group A | | | | | | | Group B | | | | |
| | Component | Mol% | Component | Mol% | Component | Mol% | Total mol% of Group A component | Component | Mol% | Component | Mol% | Total mol% of Group B component |
| 21 | $ScO_{1.5}$ | 15 | | | | | 15 | $TaO_{2.5}$ | 17 | | | 17 |
| 22 | $EuO_{1.5}$ | 10 | | | | | 10 | $NbO_{2.5}$ | 11 | | | 11 |
| 23 | $GdO_{1.5}$ | 20 | | | | | 20 | $TaO_{2.5}$ | 25 | | | 25 |
| 24 | $TbO_{1.5}$ | 10 | | | | | 10 | $TaO_{2.5}$ | 15 | | | 15 |
| 25 | $DyO_{1.5}$ | 20 | | | | | 20 | $NbO_{2.5}$ | 25 | | | 25 |
| 26 | $HoO_{1.5}$ | 15 | | | | | 15 | $NbO_{2.5}$ | 17 | | | 17 |
| 27 | $TmO_{1.5}$ | 15 | | | | | 15 | $TaO_{2.5}$ | 20 | | | 20 |
| 28 | $LuO_{1.5}$ | 20 | | | | | 20 | $NbO_{2.5}$ | 25 | | | 25 |
| 29 | $ErO_{1.5}$ | 20 | | | | | 20 | $NbO_{2.5}$ | 22 | | | 22 |
| 30 | $YO_{1.5}$ | 5 | $YbO_{1.5}$ | 5 | $EuO_{1.5}$ | 10 | 20 | $NbO_{2.5}$ | 11 | $TaO_{2.5}$ | 11 | 22 |
| 31 | $YO_{1.5}$ | 15 | CaO | 15 | | | 30 | $NbO_{2.5}$ | 20 | $TaO_{2.5}$ | 20 | 40 |
| 32 | $YO_{1.5}$ | 16 | | | | | 16 | $NbO_{2.5}$ | 18 | | | 18 |

## Table 3(a)-2

| Sample No. | Composition | | | | | | | | | | | |
| --- | --- | --- | --- | --- | --- | --- | --- | --- | --- | --- | --- | --- |
| | Group A | | | | | | | Group B | | | | |
| | Component | Mol% | Component | Mol% | Component | Mol% | Total mol% of Group A component | Component | Mol% | Component | Mol% | Total mol% of Group B component |
| 33 | $YO_{1.5}$ | 3 | | | | | 3 | $NbO_{2.5}$ | 2 | | | 2 |
| 34 | - | | | | | | | $TaO_{2.5}$ | 10 | | | 10 |
| 35 | $YO_{1.5}$ | 40 | | | | | 40 | $NbO_{2.5}$ | 40 | | | 40 |
| 36 | $YO_{1.5}$ | 8 | | | | | 8 | - | | | | - |

EP 0 345 824 B1

EP 0 345 824 B1

Table 3(b)-1

| Sample No. | Composition | | | | | Sintering aid [1] | | Electric resistivity ($\Omega \cdot cm$) | Thermal expansion coefficient ranging from 40°C to 800°C ($^{\circ}C^{-1}$) | Flexural strength ($kg/mm^2$) | Main crystal phase [2] | Remarks |
|---|---|---|---|---|---|---|---|---|---|---|---|---|
| | Group C | | | | | | | | | | | |
| | Component | Mol% | Component | Mol% | Total mol% of Group C component | Compound | Wt.% | | | | | |
| 21 | $ZrO_2$ | 68 | | | 68 | alumina | 2 | $9.9 \times 10^7$ | $1.0 \times 10^{-5}$ | 31 | T | |
| 22 | $ZrO_2$ | 79 | | | 79 | - | | $4.7 \times 10^7$ | $1.0 \times 10^{-5}$ | 32 | T | |
| 23 | $ZrO_2$ | 55 | | | 55 | clay | 2 | $5.0 \times 10^7$ | $1.0 \times 10^{-5}$ | 37 | T | |
| 24 | $ZrO_2$ | 75 | | | 75 | alumina | 5 | $4.4 \times 10^7$ | $1.0 \times 10^{-5}$ | 32 | T | |
| 25 | $ZrO_2$ | 55 | | | 55 | clay | 2 | $5.0 \times 10^7$ | $1.0 \times 10^{-5}$ | 37 | T | |
| 26 | $ZrO_2$ | 68 | | | 68 | clay | 3 | $7.6 \times 10^7$ | $1.0 \times 10^{-5}$ | 39 | T | |
| 27 | $ZrO_2$ | 65 | | | 65 | alumina | 5 | $8.1 \times 10^7$ | $1.0 \times 10^{-5}$ | 37 | T | |
| 28 | $ZrO_2$ | 55 | | | 55 | - | | $5.9 \times 10^7$ | $1.0 \times 10^{-5}$ | 37 | T | |
| 29 | $ZrO_2$ | 58 | | | 58 | - | | $6.3 \times 10^7$ | $1.0 \times 10^{-5}$ | 40 | T | |
| 30 | $ZrO_2$ | 30 | $HfO_2$ | 28 | 58 | clay | 10 | $9.6 \times 10^7$ | $1.0 \times 10^{-5}$ | 39 | T | |
| 31 | $ZrO_2$ | 30 | | | 30 | clay | 5 | $7.3 \times 10^7$ | $0.9 \times 10^{-5}$ | 29 | T | |
| 32 | $ZrO_2$ [3] | 66 | | | 66 | - | | $6.0 \times 10^7$ | $1.0 \times 10^{-5}$ | 39 | T | |

Table 3(b)-2

| Sample No. | Composition | | | | | Sintering aid [1] | | Electric resistivity (Ω·cm) | Thermal expansion coefficient ranging from 40°C to 800°C (°C⁻¹) | Flexural strength (kg/mm²) | Main crystal phase [2] | Remarks |
|---|---|---|---|---|---|---|---|---|---|---|---|---|
| | Group C | | | | | | | | | | | |
| | Compo-nent | Mol% | Compo-nent | Mol% | Total mol% of Group C component | Compound | Wt.% | | | | | |
| 33 | $ZrO_2$ | 96 | | | 96 | clay | 5 | measurement is impossible | measurement is impossible | measurement is impossible | measurement is impossible | broken during firing |
| 34 | $ZrO_2$ | 90 | | | 90 | clay | 5 | " | " | " | " | " |
| 35 | $ZrO_2$ | 20 | | | 20 | - | - | $2.4 \times 10^7$ | $0.8 \times 10^{-5}$ | 19 | X | |
| 36 | $ZrO_2$ | 92 | | | 92 | - | - | $1.2 \times 10^3$ | $1.0 \times 10^{-5}$ | 53 | T | |

1) Addition amount of sintering aid based on the total weight of ceramics.
2) T: Tetragonal phase.
   X: Mixed phase of compounds of Group A component and Group B component.
3) High purity $ZrO_2$ having an $HfO_2$ content of not higher than 100 ppm.

## Example 3

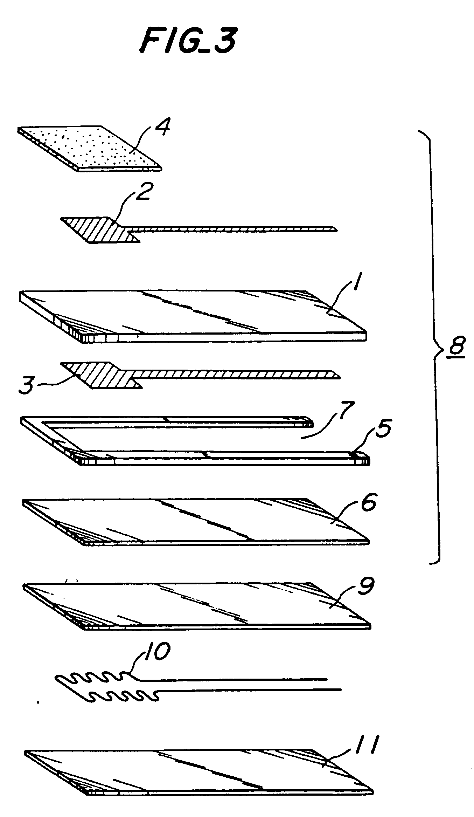

Oxygen sensors were produced by using conventional zirconia ceramics and ceramics prepared by the process of the present invention. Fig. 3 shows the development of the sensors. In Fig. 3, a measuring electrode 2 is arranged on one surface of a solid electrolyte 1 consisting of zirconia ceramics, and a reference electrode 3 is arranged on another surface thereof. The measuring electrode 2 is contacted through a porous spinel layer 4 with a gas to be measured, and the reference electrode 3 is contacted with the air through a cavity 7 formed by a rectangular layer 5 and an airtight layer 6, both consisting of zirconia ceramics having the same composition as that of the solid electrolyte 1, whereby an oxygen concentration cell 8 is formed. Further, an insulating layer 9 is tightly adhered to the oxygen concentration cell 8, a heater 10 is arranged on the surface of the insulating layer 9, a protecting layer 11 is laminated so as to cover the heater 10 to form an oxygen sensor element. This oxygen sensor element was produced in the following manner.

Raw materials were mixed in a mixing ratio so as to form a mixture having the same composition as that of Sample No. 36 in Table 3, and the resulting mixture was treated according to the steps described in Example 1 to produce dried and pulverized zirconia powder. To 100 parts by weight of the dried and pulverized zirconia powder were added 8 parts by weight of polyvinylbutyral and 100 parts by weight of trichloroethylene, and the resulting mixture was homogeneously mixed for 16 hours in a ball mill to produce a zirconia slurry, and the zirconia slurry was spread into a plate-shaped article by a doctor blade method to produce a zirconia tape. An unfired zirconia plate, which would be made into a solid electrolyte 1, was cut out from this zirconia tape, and platinum paste to be formed into a reference electrode 3 was printed on one surface of the unfired zirconia plate. Further, unfired zirconia plates to be formed into a rectangular layer 5 and an airtight layer 6 were cut out from the same zirconia tape as the above described zirconia tape used for the production of the solid electrolyte 1, and laminated on the printed platinum paste under pressure. After lamination, a paste consisting of a powder having the same composition as that of Sample No. 5 described in Table 1 and used in the present invention was printed, so as to form an insulating layer 9, on one surface of the unfired zirconia plate to be formed into the airtight layer. After the resulting laminated mass was dried, a platinum paste to be formed into a heater 10 was printed on the printed layer to be formed into the insulating layer 9, and further the same paste as that used for the formation of the insulating layer 9 was printed on the above printed platinum paste in order to form a protecting layer 11. After the laminated assembly was fully dried, the resulting monolithically shaped article was fired at 1,350°C in an electric furnace. After the firing, a measuring electrode 2 was formed on another surface of the solid electrolyte 1, on which the reference electrode 3 was not arranged, by a spattering of platinum, and a porous spinel layer 4 was plasma-coated on the spattered platinum of measuring electrode 2. The resulting oxygen sensor, wherein the ceramics produced by the method of the present invention is used in the insulating layer 9 and protecting layer 11, is referred to as an oxygen sensor element A. For comparison, an oxygen sensor element B, wherein conventional zirconia ceramics having the same composition as that of the solid electrolyte 1 was used in the insulating layer 9 and protecting layer 11, and an oxygen sensor element C, wherein alumina ceramics was used in the insulating layer 9 and protecting layer 11, were produced. The solid electrolyte 1 of each oxygen sensor element had a dimension of 0.5 mm thickness, 6 mm width and 40 mm length. The oxygen sensor element A using the ceramics produced by the method of the present invention and the oxygen sensor element B using the conventional zirconia ceramics did not bend during the firing, and were good in the adhesion between the airtight layer 6 and the insulating layer 9. However, the oxygen sensor element C, wherein the alumina ceramics was used, bent during the firing due to the difference of shrinkages during the firing between the zirconia ceramics, which formed the concentration cell 8, and the alumina ceramics, which formed the insulating layer 9 and protecting layer 11, and further somewhat cracked between the airtight layer 6 and the insulating layer 9.

Then, each oxygen sensor element was inserted into a propane gas burner while keeping such that air was introduced into the cavity 7, and the measuring electrode 2 was contacted with the burnt gas of propane, whereby an electromotive force caused between the measuring electrode 2 and the reference electrode 3 was measured in the following manner. Originally, the propane gas burner was controlled such that the temperature of burnt propane gas was 600°C, and electromotive forces of $E_R$ and $E_L$ at air/fuel ratios λ of air/propane of λ = 0.9 and λ = 1.1 were measured. Then, the propane gas burner was controlled such that the temperature of the burnt propane gas was 300°C, and a DC current of 12 V was applied to the heater 10 to heat the oxygen sensor element, and then the electromotive forces $E_R$ and $E_L$ at λ = 0.9 and λ = 1.1 were measured. The consumed amount of electric power in the heater 10 was about 4 W in all oxygen sensor elements, and the temperature of the vicinity of the measuring electrode 2 rose to about 580°C. The result of the measurement of the electromotive forces is shown in the following Table 4. It can be seen from Table 4 that, when the oxygen sensor elements were not heated without applying the DC current to the heater 10, $E_R$ was 850-855 mV and $E_L$ was 48-50 mV in all oxygen sensor elements. When the oxygen sensor elements were heated by applying the DC current to the heater 10, the electromotive forces of $E_R$ and $E_L$ did not substantially change from the values before the DC current heating in the oxygen sensor element A wherein the ceramics produced by the method of the present invention was used, and in the oxygen sensor element C wherein alumina ceramics was used, but the electromotive forces $E_R$ and $E_L$ of the oxygen sensor element B, wherein the conventional zirconia ceramics was used, were increased and were about 500 mV higher than the values before the DC current heating.

Then, in each oxygen sensor element, when the application of the DC current of 12 V was further continued while exposing the oxygen sensor element to the burning gas of propane at 300°C, the electromotive force was no longer generated after about 10 minutes and the zirconia ceramics was broken in the oxygen sensor element B; on the contrary, in the oxygen sensor elements A and C, even after the lapse of time of 500 hours, the electromotive force properties did not change and the appearance of the sensor elements did not change as well.

When each oxygen sensor element was exposed to a heating-cooling cycle of about 100°C ⇌ about 800°C by the ignition and extinction of propane, there was no change in the oxygen sensor elements A and B even after 100 cycles; but in the oxygen sensor element C, after the lapse of 10 cycles, the zirconia ceramics which formed the airtight layer 6, peeled completely from alumina ceramics which formed the insulating layer 9.

Table 4

| Kind of oxygen sensor element | Without DC current heating | | After DC current heating | |
|---|---|---|---|---|
| | $E_R$ (mV) | $E_L$ (mV) | $E_R$ (mV) | $E_L$ (mV) |
| Oxygen sensor element A | 850 | 48 | 855 | 55 |
| Oxygen sensor element B | 855 | 50 | 1,350 | 560 |
| Oxygen sensor element C | 850 | 50 | 850 | 52 |

As described above, in spite of the fact the ceramics produced by the method of the present invention has substantially the same thermal expansion property as that of the zirconia ceramics, the ceramics produced by the method of the present invention has an electric resistivity higher than that of the zirconia ceramics by as high as $10^1 \sim 10^5$ Ω•cm, is not broken even in the application of DC current, and can be used as an insulator. Moreover, the ceramics produced by the method of the present invention has high mechanical strength and good durability over a wide temperature range. Accordingly, the ceramics produced by the method of the present invention can be used as materials, which are required to have high mechanical strength and thermal stability, such as a structural material for internal combustion engine, cutting tool and the like, and further is very advantageous as a material which is laminated on zirconia ceramics used in a portion required to have electric insulating property like oxygen sensor.

**Claims**

1. A method of producing ceramics comprising (1) at least 70% by weight of a mixture consisting essentially of 5 to 30 mol % of at least one component selected from Group A consisting of $YO_{1.5}$, $ScO_{1.5}$, $SmO_{1.5}$, $EuO_{1.5}$, $GdO_{1.5}$, $TbO_{1.5}$, $DyO_{1.5}$, $HoO_{1.5}$, $ErO_{1.5}$, $TmO_{1.5}$, $YbO_{1.5}$, $LuO_{1.5}$, CaO and MgO; 5 to 40 mol % of at least one component selected from Group B consisting of $NbO_{2.5}$ and $TaO_{2.5}$; and 30 to 90 mol % of at least one component selected from group C consisting of $ZrO_2$ and $HfO_2$, the total amount of the components of Groups A, B and C being 100%; and (2) optionally up to 30% by weight of, as a sintering aid, alumina, silica, clay or glass, which method comprises mixing the components A, B and C optionally with a sintering aid by a wet process, drying the resulting mixture, calcining and dry-pulverising the mixture, forming a shaped body from the pulverised mixture and firing the shaped body at a temperature of from 1000°C to 1600°C.

2. A method according to claim 1 in which the shaped body is fired at a temperature of 1250°C to 1400°C.

3. A method according to claim 1 or 2, wherein a layer of paste comprising a platinum powder is overlaid on at least one side surface of said shaped body, and then the shaped body having the layer of paste is fired.

4. A method according to claim 1 or 2, wherein a layer of paste comprising a platinum powder is overlaid on at least one side surface of said shaped body, and the shaped body having the layer of paste is overlaid on a green layer comprising a ceramic material so as to form a laminated body, and the laminated body is fired.

5. A method according to claim 1 wherein the ceramics satisfies the following equation:

$\Sigma$(4-(ion valence number of each component of Group A)) x (number of moles of each component of Group A) $\leqq$ (total number of moles of components of Group B).

6. A method according to claim 1 wherein the crystal phase of the ceramic is mainly the tetragonal phase.

**Patentansprüche**

1. Verfahren zur Herstellung von Keramik enthaltend (1) wenigstens 70 Gewichts-% einer Mischung bestehend im wesentlichen aus 5 bis 30 Mol-% wenigstens einer Komponente ausgewählt aus der Gruppe A bestehend aus $YO_{1,5}$, $ScO_{1,5}$, $SmO_{1,5}$, $EuO_{1,5}$, $GdO_{1,5}$, $TbO_{1,5}$, $DyO_{1,5}$, $HoO_{1,5}$, $ErO_{1,5}$, $TmO_{1,5}$, $YbO_{1,5}$, $LuO_{1,5}$, CaO und MgO; 5 bis 40 Mol-% wenigstens einer Komponente ausgewählt aus der Gruppe B bestehend aus $NbO_{2,5}$ und $TaO_{2,5}$; und 30 bis 90 Mol-% wenigstens einer Komponente ausgewählt aus der Gruppe c bestehend aus $ZrO_2$ und $HfO_2$, wobei die gesamte Menge an Komponenten der Gruppen A, B, und C 100 % beträgt; und (2) wahlweise bis zu 30 Gewichts-%, als eine Sinterhilfe, Aluminiumoxid, Siliziumdioxid, Ton oder Glas, wobei das Verfahren das Mischen der Komponenten A, B und C wahlweise mit einer Sinterhilfe mittels eines Naßverfahrens, das Trocknen der sich ergebenden Mischung, das Kalzinieren und das Trockenpulverisieren der Mischung, das Formen eines Formkörpers aus der pulverisierten Mischung und das Brennen des Formkörpers bei einer Temperatur von 1000 °C bis 1600 °C, umfaßt.

2. Verfahren nach Anspruch 1, bei dem der Formkörper bei einer Temperatur von 1250 °C bis 1400 °C gebrannt wird.

3. Verfahren nach Anspruch 1 oder 2, bei dem eine Schicht aus einer Paste, die ein Platinpulver enthält, auf wenigstens eine Seite der Oberfläche des besagten Formkörpers gebracht wird und dann der Formkörper, der die Klebeschicht trägt, gebrannt wird.

4. Verfahren nach Anspruch 1 oder 2, bei dem eine Schicht aus einer Paste, die ein Platinpulver enthält, auf wenigstens eine Seite der Oberfläche des besagten Formkörpers gebracht wird, und der Formkörper, der die Klebeschicht trägt, auf eine frische Schicht (green layer), die ein Keramikmaterial enthält, aufgetragen wird, um so einen laminierten Körper zu bilden, und der laminierte Körper gebrannt wird.

5. Verfahren nach Anspruch 1, bei dem die Keramik die folgende Gleichung erfüllt:

$\Sigma$ (4-(Ionenvalenzzahl einer jeden Komponente der Gruppe A)) x (Zahl der Mole jeder Komponente der Gruppe A) $\leqq$ (Gesamtzahl der Mole der Komponenten der Gruppe B).

6. Verfahren nach Anspruch 1, bei dem die Kristallphase der Keramik hauptsächlich die tetragonale Phase ist.

**Revendications**

1. Procédé de production de céramiques comprenant (1) au moins 70% en poids d'un mélange constitué essentiellement de 5 à 30% en moles d'au moins un composant choisi dans le groupe A constitué de $YO_{1,5}$, $ScO_{1,5}$, $SmO_{1,5}$, $EuO_{1,5}$, $GdO_{1,5}$, $TbO_{1,5}$, $DyO_{1,5}$, $HoO_{1,5}$, $ErO_{1,5}$, $TmO_{1,5}$, $YbO_{1,5}$, $LuO_{1,5}$, CaO et MgO ; 5 à 40% en moles d'au moins un composant choisi dans le groupe B constitué de $NbO_{2,5}$ et $TaO_{2,5}$ ; et 30 à 90% en moles d'au moins un composant choisi dans le groupe C constitué de $ZrO_2$ et $HfO_2$, le total des proportions des composants des groupes A, B et C étant de 100% ; et (2) facultativement jusqu'à 30% en poids d'alumine, de silice, d'argile ou de verre, utilisés comme auxiliaire de frittage, ledit procédé comprenant les étapes consistant à mélanger les composants A, B et C, facultativement avec un auxiliaire de frittage, par un procédé par voie humide, à sécher le mélange résultant, à calciner et à réduire en poudre à sec le mélange, à former un corps façonné à partir du mélange réduit en poudre et à cuire le corps façonné à une température de 1000°C à 1600°C.

2. Procédé selon la revendication 1, dans lequel on cuit le corps façonné à une température de 1250°C à 1400°C.

3. Procédé selon la revendication 1 ou 2, dans lequel on recouvre au moins une surface latérale dudit corps façonné avec une couche de pâte comprenant une poudre de platine puis on cuit le corps façonné portant la couche de pâte.

4. Procédé selon la revendication 1 ou 2, dans lequel on recouvre au moins une surface latérale dudit corps façonné avec une couche de pâte comprenant une poudre de platine et on recouvre une couche à l'état vert comprenant un matériau céramique avec le corps façonné portant la couche de pâte de manière à former un corps stratifié et on cuit le corps stratifié.

5. Procédé selon la revendication 1, dans lequel la céramique satisfait à l'équation suivante :

$\Sigma$ (4-(nombre de valence d'ion de chaque composant du groupe A)) x (nombre de moles de chaque composant du groupe A) $\leq$ (nombre total de moles de composants du groupe B).

6. Procédé selon la revendication 1, dans lequel la phase cristalline de la céramique est principalement la phase tétragonale.

# FIG. 1

Electric Resistivity ($\Omega \cdot cm$)

$10^8$, $10^7$, $10^6$, $10^5$, $10^4$, $10^3$, $10^2$

0    0.5    1.0    1.5    2.0

Total Number of Moles of Component of Group B

$\Sigma$ (4- ( Ion Valence Number of Each Component of Group A ) ) x (Number of Moles of Each Component of Group A)

# FIG. 2

Thermal Expansion Coefficient (%) vs. Temperature (°C)

## FIG_3